# EUROPÄISCHE PATENTSCHRIFT

(11) **EP 1 630 437 B1**
(45) Veröffentlichungstag und Bekanntmachung des Hinweises auf die Patenterteilung: **17.09.2008**
(21) Anmeldenummer: 05015854.2
(22) Anmeldetag: 21.07.2005
(51) Int. Cl.: F16D 1/092, F16D 1/072, F16D 1/076

(54) **Nabenwellenverbindung**
Hub shaft connection
Accouplement arbre-moyeu

(30) Priorität: 28.08.2004 DE 102004041711
(43) Veröffentlichungstag der Anmeldung: 01.03.2006
(73) Patentinhaber: Bayerische Motoren Werke Aktiengesellschaft, 80809 München (DE)
(72) Erfinder: Haberl, Alois, 82287 Jesenwang (DE); Mehling, Ralf, Dr., 81477 München (DE); Arnold, Franz, 81927 München (DE); Hermann, Bernd, 86343 Königsbrunn (DE)

(56) Entgegenhaltungen:
- EP-A- 1 089 004
- FR-A- 655 719
- US-A- 4 460 058
- PATENT ABSTRACTS OF JAPAN Bd. 2003, Nr. 09, 3. September 2003 (2003-09-03) & JP 2003 139156 A (KAWASAKI HEAVY IND LTD), 14. Mai 2003 (2003-05-14)

## Beschreibung

Die vorliegende Erfindung betrifft eine Nabenwellenverbindung gemäß dem Oberbegriff des Patentanspruchs 1.

Bei bekannten Nabenwellenverbindungen wird das zu übertragende Wechselmoment entweder über Reibschluß oder Formschluß übertragen. Die vorliegende Erfindung befaßt sich mit einer Reibschlußverbindung. Herkömmliche Nabenwellenverbindungen, die nur über die Reibung der axial verspannten Bauteile das Moment übertragen, weisen Kontaktflächen auf, die planparallel ausgebildet sind und senkrecht zu der Bauteileachse der sich drehenden Bauteile verlaufen.

Beispielsweise sind solche Nabenwellenverbindungen an den Verbindungsstellen zwischen einer Kurbelwelle, Kettenrädern und einem Torsionsschwingungsdämpfer bekannt.

Die Vorspannkraft wird dabei über eine Zentralschraube aufgebracht, die von Seiten der Nabe die Kettenräder durchgreift und in ein Gewinde in der Kurbelwelle eingeschraubt wird. Die Zentralschraube wird in die Streckgrenze mit einem Fügemoment und einem Drehwinkel derart an- bzw. festgezogen, dass der Schraubenschaft einer Zug- und Torsionsspannung unterworfen wird.

Die Torsionsspannung kann über die Unterkopfreibung der Zentralschraube ein Lösen der Nabe bewirken, da ähnlich einer Drehfeder die Torsionsspannung im elastischen Bereich gegen die Anzugsrichtung wirkt. Zudem erzeugt die Vorspannkraft an der Zentralschraube auch eine Radialkraftkomponente, die dazu führt, dass die Kontaktflächen dazu neigen auseinanderzuklaffen. Durch dieses Auseinanderklaffen wandert der Reibradius der Kontaktflächen nach innen.

Aus dem US Patent 4,460,058 ist eine Verbindung zwischen einer Radantriebswell une einer Radnabe bekannt, wobei die Radantriebswelle in einem Gehäuse gelagert ist. Das Gehäuse und die Radnabe weisen jeweils stirnseitig eine Kontaktfläche auf. Radial außen um die Radnabe ist ein Wälzlager angeordnet. Mittels einer axial angeordneten Zentralschraube können das Gehäuse und die Radnabe durch Aufbringen einer Vorspannkraft in Richtung einer Bauteileachse miteinander verbunden werden. Um beim Befestigen der Radnabe auf dem Gehäuse keine zu großen Spannungen auf das Wälzlager aufzubringen, ist die Kontaktfläche des Gehäuses unter einem Winkel zu der Bauteileachse ausgeformt.

Aus der JP-A-2003 139156 ist ein Turbinenrad bekannt, welches mit einer Zentralschraube auf einer Antriebswelle befestigbar ist. Um ein Nachlassen der Verschraubungskraft zu verhindern, weist das Turbinenrad an einer stirnseitigen Kontaktfläche einen konischen Abschnitt auf, der zu einem konischen Abschnitt einer stirnseitigen Kontaktfläche der Antriebswelle korrespondiert.

Es ist daher die Aufgabe der vorliegenden Erfindung, ein Losbrechmoment an einer erfindungsgemäßen Nabenwellenverbindung deutlich zu erhöhen.

Diese Aufgabe wird gelöst durch eine Nabenwellenverbindung mit den Merkmalen im kennzeichnenden Teil des Patentanspruchs 1.

Vorteilhafte Weiterbildungen der erfindungsgemäßen Nabenwellenverbindung sind der Gegenstand von Unteransprüchen.

Demnach zeichnet sich die Nabenwellenverbindung, die zwischen einer Kurbelwelle einer Verbrennungskraftmaschine und zumindest einem Kettenrad und/oder einer Nabe eines Torsionsschwingungsdämpfers vorgesehen ist, wobei eine Vorspannkraft mittels einer Zentralschraube zwischen den zu verbindenden Bauteilen aufgebracht ist, dadurch aus, dass zumindest eine der ringförmigen Kontaktflächen zwischen einer Welle und der Nabe teilweise nicht senkrecht verlaufend zu einer Bauteileachse ausgebildet ist.

Mathematisch ausgedrücht, ist die zumindest eine ringförmige Kontaktfläche durch ihre Tangentialflächennormale gekennzeichnet, die nicht mit der Achse der zu verbindenden Bauteile gleichgerichtet ist bzw. mit der Bauteileachse einen Winkel einschließt.

Erfindungsgenäß weist die Kontaktfläche eine Oberflächenrauhigkeit von 4 bis 16 µm auf. Solche Oberflächenrauhigkeiten können drehend und damit kostengünstig hergestellt werden. Die sich ergebenden Rauhigkeitsspitzen an der Oberfläche der Kontaktfläche(n) können im Pressungsbereich in die gegenüberliegende Kontaktfläche eindringen und dadurch die Verbindung deutlich verbessern.

Erfindungsgenäß beträgt ein Winkel zwischen den nicht senkrecht verlaufenden Kontaktflächen der Bauteile etwa 1,5°.

Vorzugsweise und gemäß Patentanspruch 2 ist die Kontaktfläche bzw. sind die Kontaktflächen zumindest teilweise konkav oder geneigt zur Bauteileachse verlaufend ausgebildet. Die konkave Form bzw. die Neigung ist dabei so gewählt, dass die Kontaktfläche radial möglichst außen liegend angeordnet ist. Dadurch wird der Reibradius nach außen verlagert.

Nach Patentanspruch 3 ist gemäß einer bevorzugten Ausführungsform vorgesehen, dass nach dem Festziehen der Zentralschraube diese um einen bestimmten Rückdrehwinkel zurück gedreht wird. Hierdurch wird nicht nur ein Spiel zwischen den zu verbindenden Bauteilen sondern auch die Elastizität der Zentralschraube ausgeglichen.

Vorzugsweise beträgt nach Patentanspruch 4 dieser Rückdrehwinkel 3° ± 1°.

Die vorstehende Aufgabe, die Merkmale und Vorteile nach der vorliegenden Erfindung können unter Berücksichtigung der folgenden, detaillierten Beschreibung der bevorzugten Ausführungsformen der vorliegenden Erfindung und unter Bezugnahme auf die zugehörigen Zeichnungen besser verstanden werden.

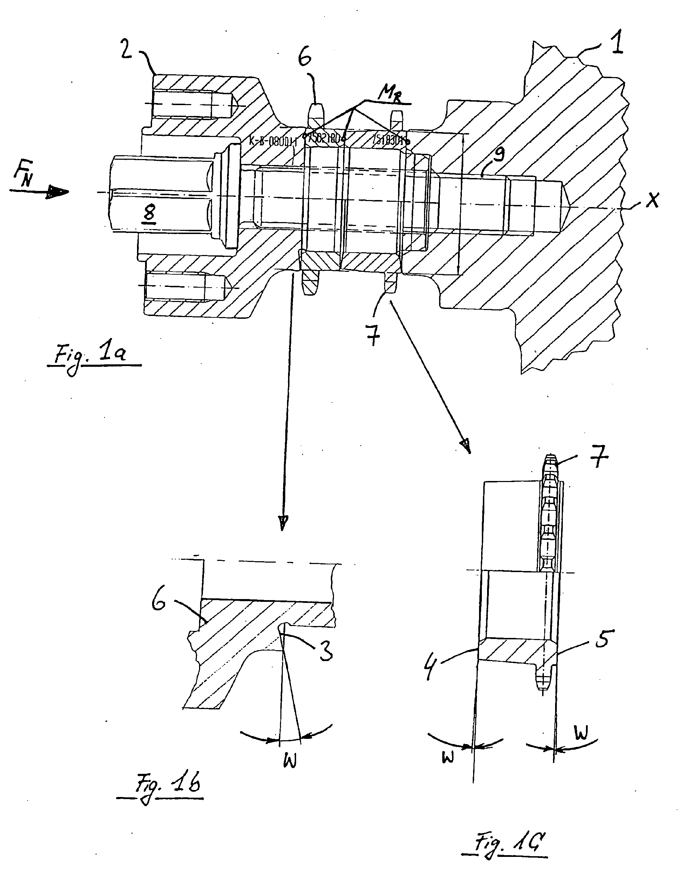

Die Erfindung wird im folgenden anhand der Zeichnungen näher erläutert. Diese zeigen in der
Fig. 1a einen Querschnitt durch eine erfindungsgemäße Nabenwellenverbindung;
Fig. 1b eine vergrößerte Darstellung einer erfindungsgemäßen Kontaktfläche an einem ersten Kettenrad; und
Fig. 1c eine weitere vergrößerte Darstellung von erfindungsgemäßen Kontaktflächen an einem zweiten Kettenrad.

In der Figur 1a ist im Querschnitt eine Nabenwellenverbindung gezeigt, die mittels einer Zentralschraube 8 eine Nabe 2 eines Torsionsschwingungsdämpfers (nicht gezeigt) mit zwei Kettenrädern 6 und 7 sowie mit einer (Kurbel-) Welle 1 verbindet. Die Zentralschraube 8 ist in ein Gewinde 9 in der Welle 1 eingeschraubt und durchgreift die beiden Kettenräder 6 und 7.

Zwischen diesen Bauteilen liegen Kontaktflächen 3, 4 und 5 vor. Wie es in den vergrößerten Darstellungen nach den Figuren 1b und 1c zu erkennen ist, sind diese Kontaktflächen 3, 4, 5 bei den dargestellten Ausführungsformen nicht planparallel bzw. senkrecht zu der Bauteileachse X ausgebildet.

Ein wesentlicher Teil der vorliegenden Erfindung ist es, dass zumindest eine dieser Kontaktflächen (die Anzahl der Kontaktflächen hängt von der Anzahl der zu verbindenden Bauteile ab), die bei der gezeigten Ausführungsform als Ringfläche ausgebildet ist, konkav bzw. schräg zur Bauteilachse verlaufend ausgebildet ist.

Nach einer Alternative, die in der Figur 1b gezeigt ist, ist die Kontaktfläche 3 an der Nabe 2 - die dem ersten Kettenrad 6 zugewandt ist - unter einem Winkel W, der 1,5° beträgt, zur Senkrechten zur Bauteileachse X angestellt.

Nach einer weiteren Alternative, die in der Figur 1c gezeigt ist, sind beide Kontaktflächen 4 und 5 am zweiten Kettenrad 7 unter einem Winkel W, der 1,5° beträgt, zur Senkrechten zur Bauteileachse X angestellt.

Die Kontaktfläche werden mit einer geeigneten Oberflächenrauhigkeit von 4 bis 16 µm versehen. Diese Oberflächenrauhigkeit kann drehend und kostengünstig hergestellt werden. Die sich ergebenden Rauhigkeitsspitzen an der Oberfläche der Kontaktfläche(n) können im Pressungbereich in die gegenüberliegende Kontaktfläche des benachbarten Bauteils eindringen und dadurch die Verbindung zwischen den Bauteilen deutlich verbessern.

Durch die nicht senkrecht zur Bauteileachse X verlaufenden Kontaktflächen 3, 4 oder 5 wird der Reibradius größer und der Reibungskoeffizient erhöht sich, da sich im hohen Preßungsbereich am Aussenradius durch die plastische Verformung die Rauhigkeitsspitzen in die gegenüberliegenden Flächen eindrücken und dadurch eine Annäherung an eine formschlüssige Verbindung entsteht.

Die sogenannten Differenzwinkel (zwischen den beteiligten Bauteilen an der nicht planparallel verlaufenden Kontaktfläche) wirken wie eine Tellerfeder und wirken einem Lösen der Zentralschraube entgegen. Eine Erhöhung des Losbrechmoments durch die vorliegende Erfindung um bis zu 100% ist erreichbar.

Zusätzlich kann nach dem Festziehen der Zentralschraube 8 diese um einen bestimmten Rückdrehwinkel zurück gedreht wird. Hierdurch wird nicht nur ein Spiel zwischen den zu verbindenden Bauteilen sondern auch die Elastizität der Zentralschraube 8 ausgeglichen. Vorzugsweise beträgt dieser Rückdrehwinkel 3° ± 1 °.

Der Rückdrehwinkel ist auf den Anwendungsfall abzustimmen und beträgt beispielhaft und im gezeigten Fall mit einer Zentralschraube M16 x 80 ca. 2° - 4°. Das Lösemoment sollte dann ca. 80% vom Anzugsfügemoment betragen, um Spiele und Elastizitäten herauszudrehen. Der Rückdrehwinkel muss dabei kleiner sein als das Haftreibungsmoment des Gewindes 9.

Bei der zeichnerisch dargestellten Ausführungsform wurde durch die oben beschriebenen Maßnahmen das Losbrechmoment der Schraubverbindung von 200 Nm auf ca. 400 Nm erhöht.

Schließlich wird ein eventuell zwischen den Bauteilen vorhandenes Öl über den sich ergebenden Keilspalt an den nicht planparallelen Kontaktflächen herausgedrückt und eine Abdichtung gegen Ölaustritt über die Zentralschraubenkopfauflage wird durch die höhere Flächenpressung in der Nabenfuge sicher gestellt.

Hinsichtlich vorstehend im einzelnen nicht näher erläuterter Merkmale der Erfindung wird in übrigen ausdrücklich auf die Ansprüche und die Zeichnungen verwiesen.

### Bezugszeichenliste

- 1: Welle
- 2: Nabe
- 3: Kontaktfläche
- 4: Kontaktfläche
- 5: Kontaktfläche
- 6: erstes Kettenrad
- 7: zweites Kettenrad
- 8: Zentralschraube
- 9: Gewinde

- F: Vorspannkraft
- M_{R}: Drehmoment (M_{R} = F_{N} * r * µ)
- W: Winkel
- X: (Bauteile-) Achse

## Patentansprüche

1. Nabenwellenverbindung mit einer Bauteileachse (X) zwischen einer Kurbelwelle (1) mit einer ersten ringförmigen, stirnseitigen Kontaktfläche einer Verbrennungskraftmaschine und zumindest einem Kettenrad (6, 7) und/oder einer Nabe (2) mit einer zweiten ringförmigen, stirnseitigen Kontaktfläche eines Torsionsschwingungsdämpfers, wobei eine Vorspannkraft (F) mittels einer Zentralschraube (8) zwischen den zu verbindenden Bauteilen aufgebracht ist, wobei zumindest eine der ringförmigen Kontaktflächen (3, 4, 5) zwischen der Welle (1) und der Nabe (2) teilweise nicht senkrecht verlaufend zu der Bauteileachse (X) ausgebildet ist,
**dadurch gekennzeichnet, dass** die Kontaktfläche (3, 4, 5) eine Oberflächenrauhigkeit von 4 bis 16 µm aufweist und dass ein Winkel (W) zwischen den nicht senkrecht verlaufenden Kontaktflächen (3, 4, 5) der Bauteile 1,5° beträgt.

2. Nabenwellenverbindung nach Anspruch 1,
**dadurch gekennzeichnet, dass** die Kontaktfläche (3, 4, 5) zumindest teilweise konkav oder geneigt zur Bauteileachse (X) verlaufend derart ausgebildet ist, dass die Kontaktfläche (3, 4, 5) radial außen liegt.

3. Nabenwellenverbindung nach einem der Ansprüche 1 oder 2,
**dadurch gekennzeichnet, dass** die Zentralschraube (8) nach einem Festziehen um einen bestimmten Rückdrehwinkel rückdrehbar ist.

4. Nabenwellenverbindung nach Anspruch 3,
**dadurch gekennzeichnet, dass** der Rückdrehwinkel 3° ± 1 ° beträgt.

## Claims

1. A hub shaft connection along an axis (X) between a crankshaft (1) comprising a first annular contact end surface of an internal combustion engine and at least one chain wheel (6, 7) and/or hub (2) comprising a second annular contact end surface of a torsion vibration damper, wherein a prestressing force (F) is applied by a central screw (8) between the components for joining, wherein at least one of the annular contact surfaces (3, 4, 5) between the shaft (1) and the hub (2) is partly non-perpendicular to the axis (X),
**characterised in that** the contact surface (3, 4, 5) has a roughness of 4 to 16 µm and the angle (W) between the non-perpendicular contact surfaces (3, 4, 5) of the components is 1.5°.

2. A hub shaft connection according to claim 1,
**characterised in that** the contact surface (3, 4, 5) is at least partly concave or at an angle to the axis (X), such that the contact surface (3, 4, 5) lies radially on the outside.

3. A hub shaft connection according to claim 1 or claim 2,
**characterised in that** the central screw (8) can be turned back through a defined angle after being tightened.

4. A hub shaft connection according to claim 3,
**characterised in that** the turning-back angle is 3 ± 1°.

## Revendications

1. Accouplement arbre-moyeu selon un axe de pièce (X) entre un vilebrequin (1) et une première surface de contact, frontale, de forme annulaire d'un moteur à combustion interne et au moins une roue à chaîne (6, 7) et/ou un moyeu (2) avec une seconde surface de contact frontal de forme annulaire d'un amortisseur d'oscillations de torsion,
une force de précontrainte (F) étant appliquée par une vis centrale (8) entre les pièces à assembler,
et au moins l'une des surfaces de contact de forme annulaire (3, 4, 5), entre l'arbre (1) et le moyeu (2), est au moins partiellement perpendiculaire à l'axe (X) des pièces,
**caractérisé en ce que**
la surface de contact (3, 4, 5) a une rugosité de 4 à 16 µm et l'angle (W), entre les surfaces de contact (3, 4, 5) qui ne sont pas perpendiculaires des pièces, est de 1,5°.

2. Accouplement arbre-moyeu selon la revendication 1,
**caractérisé en ce que**
la surface de contact (3, 4, 5) est au moins partiellement concave ou inclinée par rapport à l'axe (X) des pièces de façon que la surface de contact (3, 4, 5) se situe radialement à l'extérieur.

3. Accouplement selon l'une des revendications 1 ou 2,
**caractérisé en ce que**
la vis centrale (8) se dévisse d'un certain angle de dévissage après son serrage à fond.

4. Accouplement selon la revendication 3,
**caractérisé en ce que**
l'angle de desserrage est de 3° ± 1°.
